# EUROPEAN PATENT APPLICATION

(11) **EP 4 593 163 A1**
(43) Date of publication of application: **30.07.2025**
(21) Application number: 24194410.7
(22) Date of filing: 13.08.2024
(51) Int. Cl.: H01M 50/103, H01M 50/367

(54) **SECONDARY BATTERY**

(30) Priority: 26.01.2024 KR 20240012063
(71) Applicant: SAMSUNG SDI CO., LTD., Giheung-gu Yongin-si, Gyeonggi-do 17084 (KR)
(72) Inventor: KWON, Young Woong, 17084 Yongin-si (KR)
(74) Representative: Marks & Clerk LLP

(57) **Abstract**

A secondary battery includes: a prismatic case; an electrode assembly accommodated inside the case with an electrolyte; a cap assembly coupled to one end of the case and having a vent; and a discharge pipe inside the case and having one end adjacent to a lower surface of the case and another end in communication with the vent.

## Description

### BACKGROUND

### 1. Field

Aspects of embodiments of the present disclosure relate to a secondary battery.

### 2. Description of the Related Art

A secondary battery generally includes an electrode assembly a separator between positive and negative electrode plates that is stacked or wound, a case accommodating the electrode assembly together with an electrolyte, and a cap assembly sealing the case.

Secondary batteries can overheat when overcharged or physically damaged. In addition, a chemical reaction inside a secondary battery may be accelerated, and thus, additional heat may be generated during this process. Chemicals of the secondary battery may begin to decompose due to heat. For example, lithium salt that is generally used as an electrolyte material may decompose at high temperatures to produce gas, which increases pressure inside the battery. In addition, when the temperature inside the secondary battery rapidly rises due to the accelerated chemical reaction and the decomposition reaction, thermal runaway may occur. If the pressure inside the secondary battery continues to increase and exceeds a reference level, the case will eventually rupture and a fire will occur.

When the pressure exceeds a certain level, a vent may automatically open to discharge the gas inside, and through this process, the internal pressure of the battery is returned to and maintained at a safe level. However, even if the vent opens and the gas is discharged, a high possibility of rupture and fire remains due to the residual electrolyte inside the case.

The above information disclosed in this Background section is for enhancement of understanding of the background of the present disclosure, and therefore, it may contain information that does not constitute prior art.

### SUMMARY

Embodiments of the present disclosure provide a secondary battery having a vent for preventing thermal runaway by preventing decomposition of an electrolyte, which is a precursor to thermal runaway, by allowing the electrolyte to be discharged before the gas inside the case is discharged.

A secondary battery, according to an embodiment of the present disclosure, includes a prismatic case, an electrode assembly accommodated inside the case with an electrolyte, a cap assembly coupled to one end of the case and having a vent, and a discharge pipe inside the case and having one end adjacent to a lower surface of the case and another end communicating with the vent.

When the pressure inside the case exceeds a reference pressure, the vent may open to discharge the electrolyte and then to discharge the gas from inside the case.

The discharge pipe may have a hollow pipe shape.

The discharge pipe may not interfere with the electrode assembly.

The discharge pipe may have a bent portion.

The discharge pipe may include a connection pipe connected to the vent and a plurality of branch pipes branching from the connection pipe and extending toward the lower surface of the case.

The cap assembly may include a plurality of the vents, and a plurality of the discharge pipes may be connected to respective ones of the vents.

The discharge pipe may be made of an insulating material that is non-reactive with the electrolyte.

A secondary battery, according to another embodiment of the present disclosure, includes a pouch case having a recess and a vent at one side for discharging gas, an electrode assembly accommodated inside the case with an electrolyte; and a discharge pipe inside the case and having one end adjacent to the lower surface of the case and another end communicating with the vent.

When the pressure inside the case exceeds a reference pressure, the vent may open to discharge the electrolyte and then to discharge the gas from inside the case.

The discharge pipe may have a hollow pipe shape.

The discharge pipe may not interfere with the electrode assembly.

The discharge pipe may have a bent portion.

The discharge pipe may include a connection pipe connected to the vent and a plurality of branch pipes branching from the connection pipe and extending toward a lower surface of the recess.

The case may comprise a plurality of the vents, and a plurality of the discharge pipes may be connected to respective ones of the vents.

The discharge pipe may be made of an insulating material that is non-reactive with the electrolyte.

At least some of the above and other features of the invention are set out in the claims.

### BRIEF DESCRIPTION OF DRAWINGS

FIG. 1 is a perspective view of a secondary battery according to an embodiment of the present disclosure.
FIG. 2 is a perspective view of a cap assembly and an electrode assembly of the secondary battery shown in FIG. 1.
FIG. 3 is a partial cross-sectional view of the cap assembly and the electrode assembly shown in FIG. 2.
FIG. 4 is a front view schematically illustrating a discharge pipe in the secondary battery shown in FIG. 1 according to an embodiment.
FIG. 5 is a front view schematically showing the secondary battery shown in FIG. 4 with a vent in an open state.
FIG. 6 is a schematic side view of a discharge pipe according to another embodiment.
FIG. 7 is a schematic side view of a discharge pipe according to another embodiment.
FIG. 8 is a schematic side view of a discharge pipe according to another embodiment.
FIG. 9 is a schematic front view of the discharge pipe shown in FIG. 8.
FIG. 10 is a schematic side view of a discharge pipe according to another embodiment.
FIG. 11 is a schematic front view of the discharge pipe shown in FIG. 10.

### DETAILED DESCRIPTION

Embodiments of the present disclosure are provided to more completely describe aspects and features of the present disclosure to those skilled in the art, and the following embodiments may be modified in various other forms. The present disclosure, however, may be embodied in many different forms and should not be construed as being limited to the embodiments set forth herein. Rather, these embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a secondary battery according to embodiments of the present disclosure will be described, in detail, with reference to the accompanying drawings.

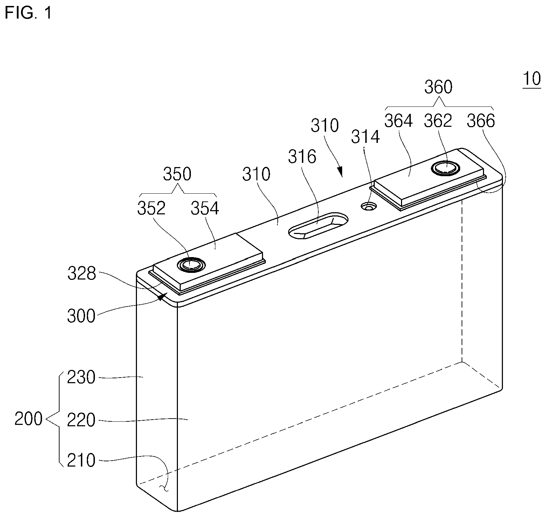

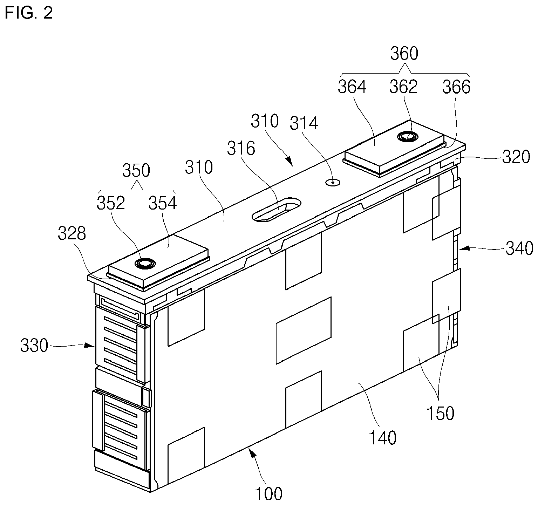

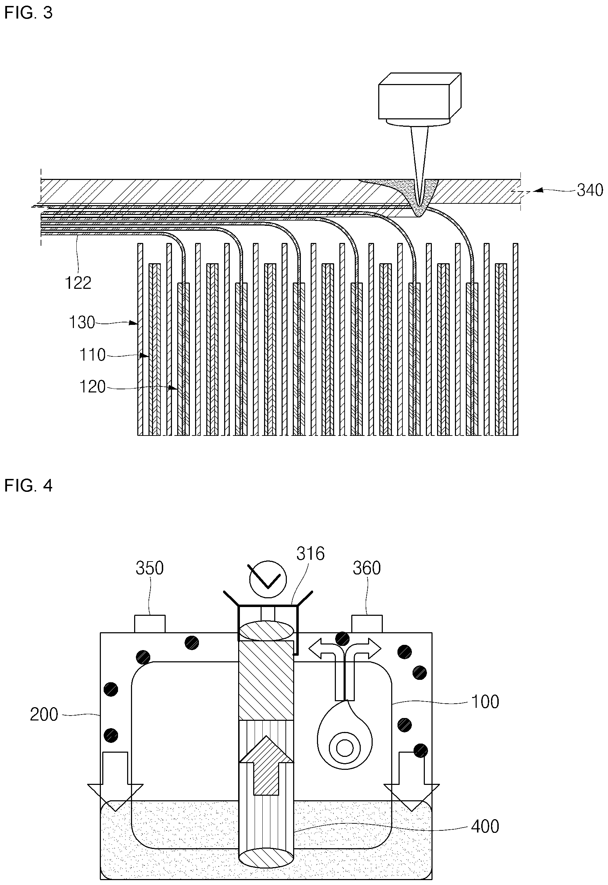

FIG. 1 is a perspective view of a secondary battery according to an embodiment of the present disclosure. FIG. 2 is a perspective view of a cap assembly and an electrode assembly of the secondary battery shown in FIG. 1. FIG. 3 is a partial cross-sectional view of the cap assembly and the electrode assembly shown in FIG. 2. For convenience, the following description will be provided with the understanding that the upper part is in the upper direction and the lower part is in the lower direction based on the orientation of FIG. 1.

Referring to FIGS. 1 to 3, a secondary battery 10, according to an embodiment of the present disclosure, may include an electrode assembly 100, a case 200 that accommodates the electrode assembly 100, and a cap assembly 300 coupled to the case 200. For example, the secondary battery 10 may be a prismatic battery in which the case 200 has a rectangular parallelepiped shape. However, this is only an example, and aspects and features of the present disclosure can be applied to various types of secondary batteries, such as cylindrical and pouch-type secondary batteries.

Referring to FIGS. 2 and 3, the electrode assembly 100 may be formed (or provided) by winding a unit stack consisting of a first electrode plate 110 and a second electrode plate 120, which have a thin plate or layer shape, and a separator 130 interposed therebetween, or by stacking a plurality of unit stacks. When the electrode assembly 100 is formed by being wound, the winding axis may extend in a horizontal direction substantially parallel to the longitudinal direction of the cap assembly 300 or in a vertical direction approximately perpendicular to the longitudinal direction of the cap assembly 300. When the electrode assembly 100 is formed by stacking, long side surfaces of a plurality of unit stacks may be arranged to be adjacent to each other. A sheet 140 made of an insulating material may be attached to the outside of the electrode assembly 100 by using an insulating tape 150 to insulate the electrode assembly 100 from the case 200. For example, the first electrode plate 110 may be a negative electrode, and the second electrode plate 120 may be a positive electrode, or vice versa.

When the first electrode plate 110 is a negative electrode, the first electrode plate 110 may be formed by applying a first electrode active material, such as graphite or carbon, to a first electrode current collector formed of a metal foil, such as copper, a copper alloy, nickel, or a nickel alloy. The first electrode plate may have a first uncoated portion, which is a region where the first electrode active material is not applied. Because the first uncoated portion acts as a tab to be electrically connected to a first current collector plate 330, which will be described later, the first uncoated portion may be defined as (or referred to as) the first substrate tab. A plurality of first substrate tabs may be bent to one side and welded to the first current collector plate 330. The first current collector plate 330 may be electrically connected to the cap assembly 300.

When the second electrode plate 120 is a positive electrode, the second electrode plate 120 may be formed by applying a second electrode active material, such as a transition metal oxide, to a second electrode current collector formed by a metal foil, such as aluminum or an aluminum alloy. The second electrode plate may have a second uncoated portion 122, which is a region where the second electrode active material is not applied. Because the second uncoated portion acts as a tab to be electrically connected to a second current collector plate 340, which will be described later, the second uncoated portion may be defined as (or referred to as) a second substrate tab. A plurality of second substrate tabs can be bent to one side and welded to the second current collector plate 340. The second current collector plate 340 may be electrically connected to the cap assembly 300.

The separator 130 may be disposed between the first electrode plate 110 and the second electrode plate 120 to prevent a short circuit therebetween and to enable movement of lithium ions. For example, the separator 130 may include polyethylene, polypropylene, or may be a composite film of polyethylene and polypropylene, but the present disclosure does not limit the material of the separator 130 to the above-mentioned materials.

The electrode assembly 100 may be accommodated in the case 200 together with an electrolyte. In some examples, the electrolyte may include a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC). The electrolyte may be in a liquid or gel phase.

Referring to FIG. 1, the case 200 has a substantially rectangular box shape with an upper portion in the longitudinal direction and may have an accommodating space formed therein. The electrode assembly 100 and the electrolyte may be accommodated inside the case 200 through the open upper portion. Some components of the cap assembly 300 may be exposed to the outside of the case 200, and some components thereof may be accommodated inside the case 200. The case 200 may have a rectangular bottom surface 210 and four side surfaces connected to (e.g., extending from) the bottom surface 210. From among the side surfaces, the side surface having a relatively large area is defined as (or referred to as) a long side portion 220, and the side surface having a relatively small area is defined as (or referred to as) a short side portion 230. For example, the electrode assembly 100 may have a plate surface (e.g., a flat or substantially flat surface) arranged to face the long side portion 220. After the electrode assembly 100 is accommodated in the case 200, the cap assembly 300 is coupled to the case 200 and is electrically connected to the electrode assembly 100.

Referring to FIGS. 1 and 2, the cap assembly 300 may include a cap plate 310 coupled to the case 200, a plurality of insulating members, the first current collector plate 330, the second current collector plate 340, a first terminal portion 350, and a second terminal portion 360.

The cap plate 310 has a substantially rectangular plate shape and may be made of the same material as the case 200. The cap plate 310 may have terminal holes (e.g., terminal openings) for coupling with the first terminal portion 350 and the second terminal portion 360, respectively, a liquid injection hole (e.g., a liquid injection opening) 314, and a vent hole (e.g., a vent opening) for coupling with the vent 316. To insulate the cap plate 310 and the electrode assembly 100 from each other, a plurality of insulating members, such as an insulating plate 320, may be provided.

The first current collector plate 330 electrically connects the first electrode plate 110, which is a negative electrode, to the first terminal portion 350. The first current collector plate 330 may be made of the same material as the first electrode plate 110. For example, the first current collector plate 330 may be electrically connected to the first substrate tab of the first electrode plate 110 by laser welding.

The second current collector plate 340 may be arranged to be symmetrical to the first current collector plate 330 and may electrically connect the second electrode plate 120, which is a positive electrode, to the second terminal portion 360. The second current collector plate 340 may be made of the same material as the second substrate tab of the second electrode plate 120.

The first terminal portion 350 may include a first terminal pin 352 and a first terminal plate 354. The first terminal plate 354 may be insulated from the cap plate 310 by an insulating member 328. The first terminal pin 352 is electrically connected to the first current collector plate 330 and, thus, is electrically connected to the first electrode plate 110 of the electrode assembly 100.

The second terminal portion 360 may include a second terminal pin 362, a second terminal plate 364, and a conductive plate 366. The second terminal portion 360 may be arranged to be symmetrical to the first terminal portion 350. The conductive plate 366 electrically connects the second terminal plate 364, which is electrically connected to the second terminal pin 362, to the cap plate 310. Accordingly, the cap plate 310 is connected to the second current collector plate 340 through the second terminal portion 360 and, thus, may be electrically connected to the second electrode plate 120. Accordingly, the cap plate 310 has a positive polarity, which is the same polarity as the second current collector plate 340, and the case 200 welded to the cap plate 310 also has a positive polarity.

When the pressure inside the case 200 is above a reference pressure, the vent 316 opens (e.g., bursts) to discharge the gas inside the case 200 to the outside. The vent 316 may have various structures, such as being fusion-bonded or including a mechanical valve or a heat-operated device.

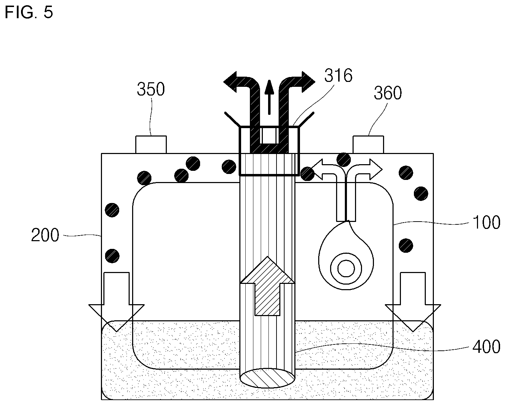

As shown in FIGS. 4 and 5, the secondary battery, according to embodiments of the present disclosure, may include at least one discharge pipe 400 provided inside the case 200. FIG. 4 is a schematic front view of a discharge pipe in the secondary battery shown in FIG. 1 according to an embodiment, and FIG. 5 is a schematic front view of secondary battery shown in FIG. 4 in which the vent is in an open state. The discharge pipe 400 is in the shape of a hollow pipe. One end (e.g., a lower end) of the discharge pipe 400 is adjacent to the lower surface of the case 200, and the other end (e.g., an upper end) of the discharge pipe 400 communicates with (e.g., is in fluid communication with) the vent 316. The lower surface of the case 200 refers to a lower surface in the direction of gravity, in which the electrolyte is collected. The one end of the discharge pipe 400 does not contact the lower surface of the case 200 but is adjacent thereto while being spaced a distance apart therefrom. Accordingly, although the vent 316 is located at the upper end of the case 200, it is in communication with the lower end inside the case 200.

FIGS. 4 and 5 illustrate an embodiment in which one discharge pipe 400 is provided, but the present disclosure is not limited thereto. The discharge pipe 400 is installed so as not to interfere with the electrode assembly 100. For example, the discharge pipe 400 may be installed in a space between the electrode assembly 100 and the case 200. To avoid interfering with the electrode assembly 100, at least a portion of the discharge pipe 400 may be bent due to, for example, the location of the vent 316. For example, when the vent 316 is located at the center of the cap plate 310, the discharge pipe 400 may extend downwardly from the vent 316 until the discharge pipe 400 touches the electrode assembly 100. Thereafter, the discharge pipe 400 may be bent to the side surface of the electrode assembly 100 to avoid the electrode assembly 100 and may extend downwardly along the side surface of the electrode assembly 100 toward the lower surface of the case 200. However, when the vent 316 is provided at a position of the cap plate 310 corresponding to the space between the electrode assembly 100 and the case 200, the discharge pipe 400 may not be bent.

As described above, the discharge pipe 400 comes into contact with the electrolyte. Therefore, the discharge pipe 400 may be made of an insulating material that does not react with the electrolyte.

If gas is generated inside the case 200 due to electrolyte decomposition, and before thermal runaway occurs and the internal pressure increases, the gas inside the case 200 pushes downwardly on the heated residual electrolyte, as shown in FIG. 4. Accordingly, the residual electrolyte flows into the discharge pipe 400 and moves toward the vent 316. Thereafter, when the pressure inside the case 200 exceeds a reference pressure (e.g., a critical pressure) and the vent 316 opens, the electrolyte is discharged to the outside. If the electrolyte is continuously discharged through the vent 316, as shown in FIG. 5, the level (or amount) of the remaining electrolyte in the case 200 becomes lower than the one end of the discharge pipe 400. When most of the remaining electrolyte is discharged, the gas inside the case 200 may then be discharged to the outside through the discharge pipe 400 following discharge of the electrolyte.

In this way, when the pressure inside the case 200 exceeds a reference pressure, when the vent 316 opens, the residual electrolyte is first discharged, and the gas is then discharged. Therefore, because no or very little residual electrolyte remains in the case 200, additional decomposition of the residual electrolyte that may occur after the vent opens is avoided or substantially avoided and thermal runaway due to such decomposition may be prevented.

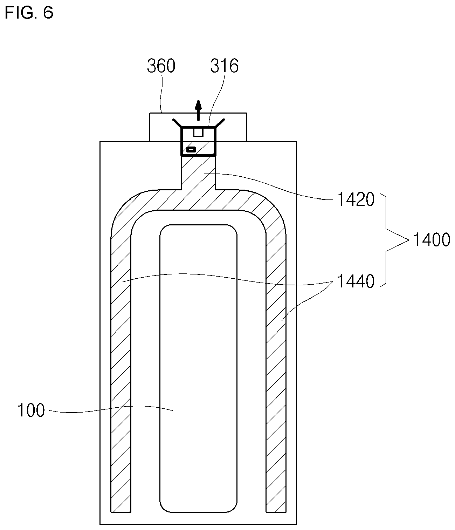

Next, another embodiment of the discharge pipe will be described with reference to FIG. 6. FIG. 6 is a schematic side view of a discharge pipe according to another embodiment.

In this embodiment, the discharge pipe 1400 may include a connection pipe 1420 connected to the vent 316 and a plurality of branch pipes 1440 branched from the connection pipe 1420 and extending toward the lower surface of the case 200. In this embodiment, the vent 316 is located at the center of the cap plate 310. Accordingly, the connection pipe 1420 may extend downwardly from the vent 316 until it touches the electrode assembly 100. Thereafter, the plurality of branch pipes 1440 may be respectively bent from the connection pipe 1420 to (or toward) opposing side surfaces of the electrode assembly 100 and then extend downwardly toward the lower surface of the case 200.

When the discharge pipe 1400 is provided in this configuration, when the pressure inside the case 200 exceeds a reference pressure, the vent 316 opens to discharge the residual electrolyte and the gas may then be discharged.

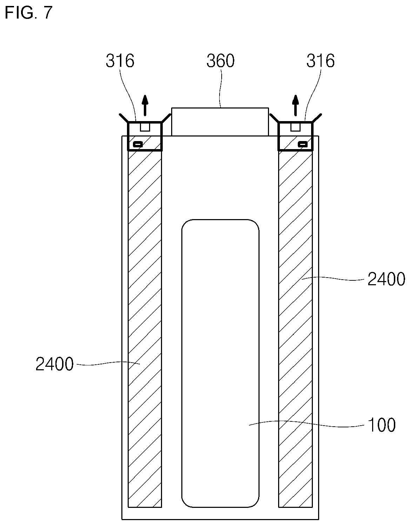

In addition, referring to Figure 7, another embodiment of the discharge pipe will be described. FIG. 7 is a schematic side view of a discharge pipe according to another embodiment.

In this embodiment, a plurality of vents 316 and discharge pipes 2400 are provided, and the respective discharge pipes 2400 may be connected to the respective vents 316. In this embodiment, two vents 316 are provided, and each vent 316 may be provided on the cap plate 310 at a position corresponding to a space between the electrode assembly 100 and the case 200. In addition, two discharge pipes 2400 are provided, and the respective discharge pipes 2400 may extend in a straight line from the respective vents 316 toward the lower surface of the case 200. However, the location and number of the vents 316 may be designed in various ways depending on the embodiment.

When the plurality of discharge pipes 2400 are provided in this configuration, when the pressure inside the case 200 exceeds a reference pressure, the plurality of vents 316 open to discharge the residual electrolyte, and the gas is then discharged.

In the above-described embodiments, a prismatic secondary battery has been described as an example, but aspects and features of the present disclosure may also be applied to a pouch-type secondary battery.

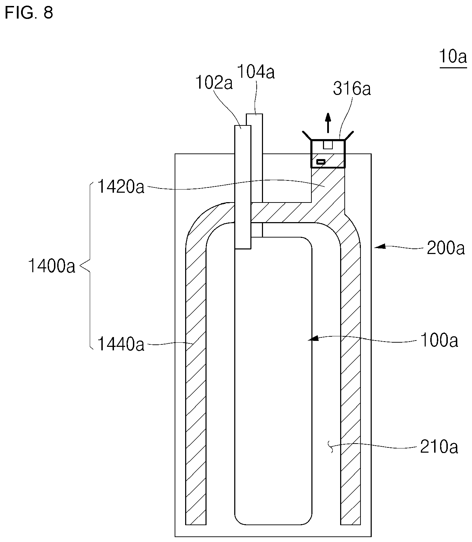

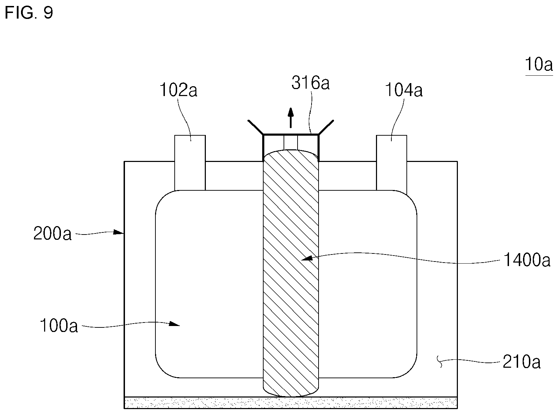

FIG. 8 is a schematic side view of a discharge pipe of a secondary battery according to another embodiment of the present disclosure. FIG. 9 is a schematic front view of the discharge pipe of the secondary battery shown in FIG. 8.

Referring to FIGS. 8 and 9, a pouch-type secondary battery 10a has a recess 210a, which is an accommodation space. The pouch-type secondary battery 10a may include a pouch-type case 200a having at least one vent 316a at one side for discharging gas, an electrode assembly 100a accommodated in the recess 210a together with an electrolyte, and at least one discharge pipe 1400a provided inside the case 200a, having one end adjacent to the lower surface of the recess 210a and the other end communicating with a vent 316a. The electrode assembly 100a may include a first electrode tab 102a electrically connected to the first electrode plate and a second electrode tab 104a electrically connected to the second electrode plate. The vent 316a may be disposed between the first electrode tab 102a and the second electrode tab 104a. The lower surface of the recess 210a refers to a lower surface in the direction of gravity, at where the electrolyte is collected. In the pouch-type secondary battery 10a, the structure of the discharge pipe 1400 described in the prismatic battery shown in FIG. 6 may be applied to the structure of the discharge pipe 1400a. For example, the discharge pipe 1400a may include a connection pipe 1420a connected to the vent 316a and a plurality of branch pipes 1440a branched from the connection pipe 1420a and extending toward the lower surface of the case 200a. Because the vent 316a is disposed between the first electrode tab 102a and the second electrode tab 104a, the discharge pipe 1400a is also disposed between the first electrode tab 102a and the second electrode tab 104a. The connection pipe 1420a may extend downwardly from the vent 316a until it touches the electrode assembly 100a. One of the branch pipes 1440a may be disposed at one side of the electrode assembly 100a and may extend toward the lower surface of the case 200a, and another one of the branch pipes 1440a may pass between the first electrode tab 102a and the second electrode tab 104a and may extend toward the lower surface of the case 200a.

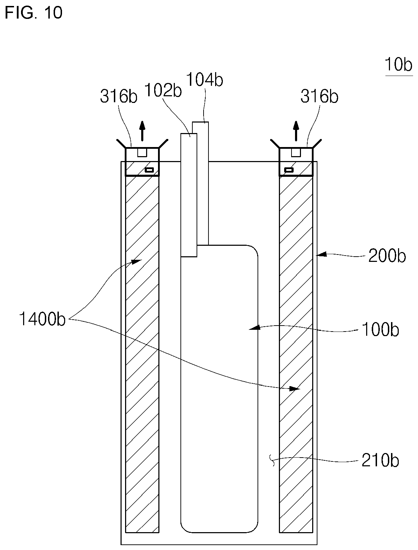

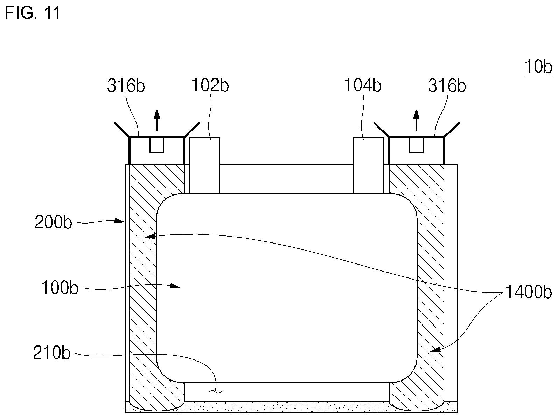

FIG. 10 is a schematic side view of a discharge pipe of a secondary battery according to another embodiment of the present disclosure. FIG. 11 is a schematic front view of the discharge pipe of the secondary battery shown in FIG. 10.

Referring to FIGS. 10 and 11, a pouch-type secondary battery 10b has a recess 210b, which is an accommodation space. The pouch-type secondary battery 10b may include a pouch-type case 200b having at least two vents 316b at one side for discharging gas, an electrode assembly 100b accommodated in the recess 210b together with an electrolyte, and a plurality of discharge pipes 1400b provided inside the case 200b, each having one end adjacent to the lower surface of the recess 210b and the other end communicating with a corresponding one of the vents 316b. The electrode assembly 100b may include a first electrode tab 102b electrically connected to the first electrode plate and a second electrode tab 104b electrically connected to the second electrode plate. The vents 316b may be disposed outside the first electrode tab 102b and the second electrode tab 104b. In the pouch-type secondary battery 10b, the structure of the discharge pipe 1400 described in the prismatic battery shown in FIG. 7 may be applied to the structure of the discharge pipes 1400b in the same manner. For example, in this embodiment, two discharge pipes 1400b may be connected to two vents 316b, respectively. The two discharge pipes 1400b may each extend in a straight line from the respective vents 316b toward the lower surface of the case 200b. The discharge pipes 1400b may be spaced apart from the electrode assembly 100b. The location and number of the vents 316b may be designed in various suitable ways.

Accordingly, when the pressure inside a case exceeds a reference pressure, a vent opens (e.g., bursts) to discharge the remaining (or residual) electrolyte before discharging the gas inside the case.

As described above, according to embodiments of the present disclosure, by discharging the electrolyte first before the gas inside the case is discharged through the vent, decomposition of the remaining electrolyte can be prevented, thereby preventing thermal runaway. Accordingly, rupture and fire caused by thermal runaway can be prevented.

The foregoing embodiments are only some embodiments for carrying out the secondary battery according to the present disclosure, which is not limited to these embodiments, Accordingly, it will be understood by a person skilled in the art that various changes in form and details may be made therein without departing from the scope of the present disclosure as defined by the following claims and their equivalents.

## Claims

1. A secondary battery comprising:
a prismatic case;
an electrode assembly accommodated inside the case with an electrolyte;
a cap assembly coupled to one end of the case and having a vent; and
a discharge pipe inside the case and having one end adjacent to a lower surface of the case and another end in communication with the vent.

2. The secondary battery as claimed in claim 1, wherein, when the pressure inside the case exceeds a reference pressure, the vent opens to discharge the electrolyte and then to discharge the gas from inside the case.

3. The secondary battery as claimed in claim 1 or 2, wherein the discharge pipe has a hollow tube shape.

4. The secondary battery as claimed in claim 1, 2 or 3, wherein the discharge pipe does not interfere with the electrode assembly.

5. The secondary battery as claimed in any preceding claim, wherein the discharge pipe has a bent portion.

6. The secondary battery as claimed in any preceding claim, wherein the discharge pipe comprises:
a connection pipe connected to the vent; and
a plurality of branch pipes branching from the connection pipe and extending toward the lower surface of the case.

7. The secondary battery as claimed in any preceding claim, wherein the cap assembly comprises a plurality of the vents, and
wherein a plurality of the discharge pipes are connected to respective ones of the vents.

8. A secondary battery comprising:
a pouch case having a recess and a vent at one side for discharging gas;
an electrode assembly accommodated inside the case with an electrolyte; and
a discharge pipe inside the case and having one end adjacent to a lower surface of the case and another end in communication with the vent.

9. The secondary battery as claimed in claim 8, wherein, when the pressure inside the case exceeds a reference pressure, the vent opens to discharge the electrolyte and then to discharge the gas from inside the case.

10. The secondary battery as claimed in claim 8 or 9, wherein the discharge pipe has a hollow pipe shape.

11. The secondary battery as claimed in claim 8, 9 or 10, wherein the discharge pipe does not interfere with the electrode assembly.

12. The secondary battery as claimed in any one of claims 8 to 11, wherein the discharge pipe has a bent portion.

13. The secondary battery as claimed in any one of claims 8 to 12, wherein the discharge pipe comprises:
a connection pipe connected to the vent; and
a plurality of branch pipes branching from the connection pipe and extending toward a lower surface of the recess.

14. The secondary battery as claimed in any one of claims 8 to 13, wherein the pouch case comprises a plurality of the vents, and
wherein a plurality of the discharge pipes are connected to respective ones of the vents.

15. The secondary battery as claimed in any preceding claim, wherein the discharge pipe is made of an insulating material that is non-reactive with the electrolyte.
